(19) Europäisches Patentamt
European Patent Office
Office européen des brevets

(11) **EP 1 431 333 A1**

(12) **EUROPEAN PATENT APPLICATION**

(43) Date of publication:
**23.06.2004 Bulletin 2004/26**

(51) Int Cl.[7]: **C08J 3/12**, C11D 3/00

(21) Application number: **03257681.1**

(22) Date of filing: **06.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.12.2002 US 434998 P**

(71) Applicant: **ROHM AND HAAS COMPANY**
**Philadelphia, Pennsylvania 19106-2399 (US)**

(72) Inventor: **Dougherty, Richard Charles**
**Moorestown New Jersey 08057 (US)**

(74) Representative: **Kent, Venetia Katherine et al**
**Rohm and Haas (UK) Ltd.,**
**European Patent Department,**
**28th Floor,**
**City Point,**
**One Ropemaker Street**
**London EC2Y 9HS (GB)**

(54) **Process for preparing polymeric detergent additives**

(57) The present invention relates to a process for preparing polymeric detergent additives from dry neutralized polymer granules having increased bulk density, larger mean particle size with a small distribution of fines and lower hygroscopicity.

EP 1 431 333 A1

Printed by Jouve, 75001 PARIS (FR)

**Description**

The present invention relates to the preparation of granules of water soluble or water dispersable polymers, suitable for use as additives for preparing tablets. More particularly, the invention is directed to a process for preparing dry polymer granules for use as detergent additives that are water soluble or water dispersable, that have low hygroscopicity and that have both the required density and particle size to prepare detergent tablets.

Granulated polymers are widely used in formulations where large quantities of water are undesirable, e.g., fabric washing powder, dishwashing powder, dishwashing tablets, water softening powder/tablets and wettable powders containing active ingredients. The polymers may be included to function as binders, dispersants, and wicking agents.

The term "tablet" refers to any solid formulation, including but not limited to, tablets, bricks, briquettes, bars, granules, granulates, co-granulates, balls, or blocks. Tablets are well known in the fields of medicine, food science, agriculture, consumer products and more recently they are being used in detergent applications. Tablets offer certain advantages over granular compositions. Tablets are non-dusting, do not require measuring, take up less space because they are compressed and the ingredients that make up a pellet do not separate during transit and storage. Tablets also allow the separation of incompatible ingredients within different layers of the tablet body. Tablets are generally made by compressing or compacting a solid composition which includes one or more active components and various additives or ingredients.

U. S. Patent No. 6,492,320 discloses a granulated, polymeric tablet additive which surprisingly functions as a binder, a disintegrating agent and a wicking agent in one solid material and is used in the processing of tablets by direct compression. Tablets processed with such solid compositions have sufficient mechanical strength to be handled and stored without breakage, yet dissolve rapidly upon contact with water. The polymeric additive can be incorporated at any stage of the tableting process prior to tablet compaction and, optionally the polymeric additive can be co-granulated with other functional additives.

It is desirable to prepare polymeric additives from dry polymer granules having increased bulk density, larger mean particle size with a small distribution of fines and lower hygroscopicity. Manufacturers of solid polymer granules for detergent tablets, however, are currently not able to produce polymer granules having optimal physical properties required to prepare tablets, namely low hygroscopicity. Highly neutralized polymers have advantages in that they afford polymeric granules that have higher bulk densities and are more readily amendable to spray drying. However, highly neutralized polymers are more hygroscopic and tend to degrade to a non-flowing paste-like form when the solids are exposed to a humid environment such as is found in conventional spray drying equipment. Acidic polymers such as those prepared from acrylic acid and methacrylic acid even after significant moisture pick up often still have good flow characteristics suitable for spray drying. Hygroscopicity is a function of particle porosity and particle morphology. Conventional spray drying results in particles having relatively high hygroscopicity. It is desirable, therefore, to lower the moisture pick up, referred to as hygroscopicity, of granulated polymers used a detergent additives. It is also desirable to provide solid polymers which incorporate the high bulk densities characteristic of highly neutralized polymers while having the hygroscopicity and particle shape retention properties of unneutralized polymers.

Inventors have discovered an efficient manufacturing process for preparing neutralized polymeric granules having low hygroscopicity and increased bulk density using fluidized spray drying. In the process, fluidized spray drying of acrylic polymer granules under relatively low pressure achieves increased bulk densities and low hygroscopicities that match well with the bulk densities of co-granulated solids. The final co-granulated solids exhibit low moisture pick up, increased particle size and increased bulk density. Moreover, the co-granulated solids produced exhibit higher hardness, which correlates with improved mechanical strength for the tablet.

Accordingly, there is provided a process for manufacturing neutralized polymer granules which includes the steps of: (a) introducing a neutralized emulsion polymer having a Tg ranging from -20°C to 250°C as seed particles; and (b) spraying an aqueous solution of emulsion polymer on to seed particles to achieve a particle size ranging from 100 μm to 3000 μm, a bulk density greater than 500 g/Liter and low hygroscopicity.

In another aspect of the present invention, there is provided a process for manufacturing neutralized polymer granules which includes the steps of: (a) introducing a slurry of 0 to 40 % by weight of one or more inorganic solids and 20 to 80% by weight of one or more an emulsion polymer having a Tg ranging from -20°C to 250°C as seed particle; and (b) spraying an aqueous solution of emulsion polymer on to seed particles to achieve a particle size ranging from 100 μm to 3000 μm and a bulk density greater than 500 g/Liter and low hygroscopicity.

The polymeric granules use for preparing a tablet usefully employed in accordance with the present invention includes one or more polymeric binders, one or more inorganic solids and one or more organic solids. Suitable binders that make up the tableting aid include for example acrylic based solution, suspension or emulsion polymers; saccharides such as dextrose, glucose, sucrose, maltose, fructose, cyclodextrin and cyclodextrin derivatives; polysaccharides such as starch, starch derivatives, cellulose, cellulose derivatives such as sodium carboxymethylcellulose, cellulose ethers, methyl cellulose, ethyl hydroxyethyl cellulose, cross-linked cellulose derivatives; naturally occurring gums such as tragacanth gum and gum arabic. Suitable inorganic solids that make up the pellet aid include for example zeolites; clays; alkali- or alkaline-earth metal silicates, such as aluminosilcates; silica; alkali- and alkaline-earth metal carbonates, such as sodium carbonate and magnesium carbonate; alkali- and alkaline-earth metal citrates, such as sodium citrate and calcium citrate; alkali- and alkaline-earth metal acetates, such as sodium acetate. Suitable organic solids that make up the pellet aid include for example polymer dispersants such as poly(meth)acrylic; saccharides such as dextrose, glucose, sucrose, maltose, fructose, cyclodextrin and cyclodextrin derivatives; polysaccharides such as starch, starch derivatives, cellulose, cellulose derivatives such as sodium carboxymethylcellulose, cellulose ethers, methyl cellulose, ethyl hydroxyethyl cellulose, cross-linked cellulose derivatives.

The polymers usefully employed in accordance with the present invention may be soluble or insoluble in water; those which are water insoluble are preferably readily dispersible in water. As used herein, the term "water soluble", as applied to monomers, indicates that the monomer has a solubility of at least 1 gram per 100 grams of water, preferably at least 10 grams per 100 grams of water and more preferably at least about 50 grams per 100 grams of water. The term "water insoluble", as applied to monomers, refers to monoethylenically unsaturated monomers which have low or very low water solubility under the conditions of emulsion polymerization, as described in U.S. Patent No. 5,521,266. An aqueous system refers to any solution containing water.

Suitable solution, suspension or emulsion polymers usefully employed in accordance with the present invention are prepared from one or more of the following monomers: (meth)acrylic acid, (meth) acrylate esters such as methyl (meth)acrylate, ethyl (meth)acrylate, butyl (meth)acrylate iso-butyl (meth)acrylate or t-butyl(meth)acrylate, 2-ethylhexyl (meth) acrylate, decyl (meth)acrylate iso-bornyl (meth)acrylate, and (meth)acrylate esters of alkylene glycols, polyalkylene glycols and $(C_1\text{-}C_{30})$ alkyl substituted polyalkylene glycols including esters of the formula $CH_2\text{=}CR_1\text{-}CO\text{-}O(CH_2CHR_3O)_m\ (CH_2CH_2CHR_3O)_n\ R_2$ where $R_1$ = H or methyl; $R_2$ = H or $C_1\text{-}C_{30}$ alkyl; $R_3$ = H or $C_1\text{-}C_{12}$ alkyl, m = O-40, n = O-40, and m + n is $\geq$ 1, such as hydroxyethyl (meth)acrylate, hydroxypropyl (meth)acrylate; $C_1\text{-}C_{30}$ alkyl-substituted acrylamides; vinyl sulfonate, acrylamido propane sulfonate; dimethyl amino propyl (meth)acrylamide, alkyl vinyl ethers, vinyl chloride, vinylidene chloride, N-vinyl pyrollidone, allyl containing monomers; aromatic vinyl compounds such as styrene, substituted styrenes; butadiene; acrylonitrile; monomers containing aceto acetoxy functional groups such as aceto acetoxy ethyl methacrylate; vinyl esters of saturated carboxylic acid, e.g., acetate, propionate, neodecanoate; acid or base containing monomers such as, for example, (meth)acrylic acid, itaconic acid, maleic acid, fumaric acid, N,N-dimethyl amino ethyl methacrylate; or combinations thereof. Additionally, cross-linking and grafting monomers such as 1,4-butyleneglycol methacrylate, trimethylolpropane triacrylate, allyl methacrylate, diallyl phthalate, divinyl benzene, or combinations thereof may be used. As used herein, by "(meth) acrylate" or "(meth) acrylic", we mean either acrylate or methacrylate for "(meth) acrylate" and acrylic or methacrylic for "(meth)acrylic". In one embodiment the polymeric granules are homopolymers of acrylic acid also referred to as Acusol™ 445N.

The polymers used in the present invention may be made using known techniques, for example, solution, emulsion or suspension polymerization. Alternatively, a multiphase polymer dissolved or dispersed in water may also be used. By "multi-phase" polymer we mean polymer particles with at least one inner phase or "core" phase and at least one outer or "shell" phase.. The phases of the polymers are incompatible. By "incompatible" we mean that the inner and the outer phases are distinguishable using techniques known to those skilled in the art. For example, the use of scanning electron microscopy and staining techniques to emphasize differences in the phases is such a technique. The morphological configuration of the phases of the polymers may be for example, core/shell; core/shell particles with shell phases incompletely encapsulating the core; core/shell with a multiplicity of cores; or interpenetrating network particles or phases that contain a multiplicity of hard and soft phases. The first phase may comprise a "soft" polymer with a Tg in the range -20 to + 95 °C, preferably a Tg in the range from - 1 to +95 °C. Such inner phase polymers may comprise polymerized residues of one or more of the following monomers: (meth)acrylic acid, (meth) acrylate esters such as methyl (meth)acrylate, ethyl (meth)acrylate, butyl (meth)acrylate iso-butyl (meth)acrylate or t-butyl(meth)acrylate, 2-ethylhexyl (meth) acrylate, decyl (meth)acrylate iso-bornyl (meth)acrylate, hydroxyethyl (meth) acrylate, hydroxypropyl(meth)acrylate; (meth) acrylate esters, for example, where the ester group is a polyalkylene oxide or a $C_1\text{-}C_{30}$ alkoxyl polyalkylene oxide; $C_1\text{-}C_{30}$ alkyl substituted acrylamides; vinyl sulfonate, acrylamido propane sulfonate; dimethylamino propyl(meth)acrylamide, alkyl vinyl ethers, vinyl chloride, vinylidene chloride, N-vinylpyrollidone, allyl containing monomers; aromatic vinyl compounds such as styrene, substituted styrenes; butadiene; acrylonitrile; monomers containing aceto acetoxy functional groups such as aceto acetoxy ethyl methacrylate; vinyl esters of saturated carboxylic acid, e.g., acetate; propionate, neodecanoate; acid or base containing monomers such as, for example, (meth)acrylic acid, itaconic acid, maleic acid, fumaric acid, N,N-dimethylamino ethyl methacrylate. Additionally, crosslinking and grafting monomers such as 1,4-butyleneglycol methacrylate, trimethylolpropane triacrylate, allyl methacrylate, diallyl phthalate, divinyl benzene, or combinations thereof may be used.

The outer phase (sometimes regarded as a "shell" if it encapsulates the inner phase), of the multi-phase polymer may comprise either:

    i) a polymer with a relatively high Tg value, for example from +40 to 160 °C, which makes the outer phase relatively hard. The outer phase may comprise polymerized residues of one or more of the following monomers: (meth) acrylic acid, (meth) acrylate esters such as methyl (meth)acrylate, ethyl (meth)acrylate, butyl (meth)acrylate iso-butyl (meth)acrylate or t-butyl(meth)acrylate, 2-ethylhexyl (meth) acrylate, decyl (meth)acrylate iso-bornyl (meth) acrylate, hydroxyethyl (meth)acrylate, hydroxypropyl(meth)acrylate; (meth) acrylate esters, for example, where the ester group is a polyalkylene oxide or a $C_1$-$C_{30}$ alkoxyl polyalkylene oxide; $C_1$-$C_{30}$ alkyl substituted acrylamides; vinyl sulfonate, acrylamido propane sulfonate; dimethylamino propyl(meth)acrylamide, alkyl vinyl ethers, vinyl chloride, vinylidene chloride, N-vinyl pyrollidone, allyl containing monomers, sulfonates; aromatic vinyl compounds such as styrene, substituted styrenes; butadiene; acrylonitrile; monomers containing aceto acetoxy functional groups such as aceto acetoxy ethyl methacrylate; vinyl esters of saturated carboxylic, e.g. acetate, propionate, neodecanoate; acid or base containing monomers such as, for example, (meth)acrylic acid, itaconic acid, maleic acid, fumaric acid, N,N-dimethylamino ethyl methacrylate; or

ii) a polymer with a high acid content, for example, a polymer with from 10 to 60% by weight of the polymer of for example, (meth)acrylic acid, preferably from 10 to 50% methacrylic acid and with a Tg in the range from - 30 to > 100°C. In some cases, this can give a relatively soft outer phase and is not strictly thought of as a "shell". Suitable outer phase polymers of this type are described in EP 0 576 128 A; and U. S. Patent No. 4,916,171.

iii) polyvinyl alcohol. This alcohol when used as an outer layer is found to stabilize various copolymers with Tg's in the range from - 20 to + 95 °C, for example, vinyl acetate homopolymer; vinyl acetate / ethylene copolymer; vinyl acetate/ethylene/acrylic acid or ester copolymer; vinyl acetate / acrylic acid or ester copolymer such as but not limited to those disclosed in U. S. Patent Nos. 4,921,898 and 3,827,996.

The emulsion polymer has an average particle diameter from 20 to 1000 nanometers, preferably from 70 to 300 nanometers. Particle sizes herein are those determined using a Brookhaven Model BI-90 particle sizer manufactured by Brookhaven Instruments Corporation, Holtsville NY, reported as "effective diameter". Also contemplated are multi-modal particle size emulsion polymers wherein two or more distinct particle sizes or very broad distributions are provided as is taught in US Patents No. 5,340,858; 5,350,787; 5,352,720; 4,539,361; and 4,456,726.

As used herein, the term "sequentially emulsion polymerized" or "sequentially emulsion produced" refers to polymers (including homopolymers and copolymers) which are prepared in aqueous medium by an emulsion polymerization process in the presence of the dispersed polymer particles of a previously formed emulsion polymer such that the previously formed emulsion polymers are increased in size by deposition thereon of emulsion polymerized product of one or more successive monomer charges introduced into the medium containing the dispersed particles of the pre-formed emulsion polymer.

In the sequential emulsion polymerization of the multistage emulsion polymer, the term "seed" polymer is used to refer to an aqueous emulsion polymer dispersion which may be the initially-formed dispersion, that is, the product of a single stage of emulsion polymerization or it may be the emulsion polymer dispersion obtained at the end of any subsequent stage except the final stage of the sequential polymerization.

The glass transition temperature ("Tg") of the emulsion polymer is typically from -60 °C to 100 °C, preferably from -20 C to 50 °C, the monomers and amounts of the monomers selected to achieve the desired polymer Tg range are well known in the art. Tgs used herein are those calculated by using the Fox equation (T.G. Fox, Bull. Am. Physics Soc., Volume 1, Issue No. 3, page 123(1956)). that is, for calculating the Tg of a copolymer of monomers M1 and M2,

$$1/Tg(calc.) = w(M1)/Tg(M1) + w(M2)/Tg(M2)$$

, wherein

Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2,
all temperatures being in °K.

The glass transition temperatures of homopolymers may be found, for example, in "Polymer Handbook", edited by J. Brandrup and E.H. Immergut, Interscience Publishers.

By "active ingredient" we mean any material which promotes utility and function of a pellet containing such an active ingredient in a particular application or process. The active ingredient may include for example, a material which has activity as a pharmaceutical, an agrochemical, a water treatment agent, a water softening agent, a fabric softening agent, a laundry detergent, a hard surface cleaner, a surface polishing agent, a polish stripping material, a biocide, a stone washing agent or a drain pipe cleaner.

It is believed that the pellet aid alone or in co-granulated form creates an adhesive bond between the active ingredient granules within the pellet composition under the conditions of tablet manufacture, which helps to maintain the integrity of the pellet from the point of manufacture, through storage, until used by the customer.

One embodiment of the present invention is pellets which, in addition to the multifunctional pellet aid, contain active ingredients which have activity as a laundry or dish-washing detergent and/or a hard surface cleaner, referred to collectively as detergent-active compounds. The total amount of additive may be from 0.1 to 25% by weight of the pellet, preferably from 0.5 to 15% and most preferably from 0.5 to 5% by weight of the pellet. Such pellets will typically also contain one or more other ingredients which include builders, suitably in an amount of from 5 to 80 wt %, preferably from 20 to 80 wt %; bleaching agents; processing additives; adjuvants; enzymes; scale inhibitors; emulsifiers; surfactants; soaps; dispersants; zeolites; de-greasing agents; anti-foaming agents; phosphates; phosphonates; optical brighteners; fillers; extenders; soil removers; deflocculating agents; anti-coagulants; anti-drift agents; disintegration agents, including for example, water swellable polymers; water-absorbent polymers; water entraining agents, such as, cellulose; plasticizers or coalescing agents, for example, alkylene glycol alkyl ethers, aromatic glycol ethers, alkyl polyglucosides, polysiloxanes, alcohols and alkyl ester acetates; diluents and carriers. Some of the above-mentioned ingredients may also be applicable for use in non-detergent embodiments of pellets.

The pellet aid is incorporated within the body of the pellets of the invention by any suitable method. A preferred method consists of mixing together a dry mixture of the pellet ingredients including one or more pellet aids and then compacting the mixture in a pelletizing machine to form pellets.

Typical compaction loads for commercial pellets without the binders of the present invention can be up to 5000 pounds. The additives of the present invention allow the same pellet formulation to be formed using lower compaction loads. The actual compaction load required will vary depending on the size of the particles, and the composition of the ingredients that constitute the pellet.

It is known from the disclosure of U. S. Patent No. 5,360,567 that tablets coated with a polymeric binder, namely polyethylene glycol, are also capable of acting as a disintegrant by disrupting the structure of the tablet when the tablet is immersed in water. The prior art of record further teaches that it is highly advantageous for the binder/disintegrant to coat or envelop the detergent matrix particles rather than to be simply mixed with them. The inventors have discovered, surprisingly, that by intentionally preparing a granulated, polymeric pellet aid having granules particle sizes comparable to the active ingredients and fillers that make up a pellet afford a simple and more efficient approach and yields a composition of significant utility.

Granulation is the process of enlarging the size of a particulate composition, whereby small particles are gathered together into larger, permanent, particular aggregates to render them into free-flow particles. The granulation of the pellet aid, as usefully employed in accordance with the present invention, offers the advantages of a) rendering the pellet aid free flowing; b) densifying the pellet aid; c) reducing the problem of dusting of the pellet aid; and more importantly, d) allowing a process for the manufacture of multifunctional pellet aids.

In one embodiment of the process, it is preferred that inorganic solid is a zeolite or equivalent material, the polymeric material is a homopolymer or copolymer of acrylic acid or MAA or an equivalent solution, suspension or emulsion polymer, and the organic solid is a saccharide such as dextrose. The relative amounts of each respective component, as expressed a weight percent, are preferably 20 to 30%: 20 to 50%: 30 to 50%; more preferably 20:40: 40. The preferred particle size of the granulated mixture of components that constitutes the pellet aid ranges from 100 µm to 3000 µm. A more preferred range of particle size that affords higher binding efficiency is from 200 µm to 800 µm. The most preferred particle size of pellet aid granules ranges from 200 µm to 600 µm.

In another embodiment of the process, it is preferred that inorganic solid is a zeolite or equivalent material, the polymeric material is a homopolymer or copolymer of acrylic acid or MAA or an equivalent emulsion polymer, and the organic solid is a saccharide such as dextrose. The relative amounts of each respective component, as expressed a weight percent, are preferably 20 to 30%: 20 to 50%: 30 to 50%; more preferably 20:40:40. The preferred particle size of the granulated mixture of components that constitutes the pellet aid ranges from 100 µm to 3000 µm. A more preferred range of particle size that affords higher binding efficiency is from 200 µm to 800 µm. The most preferred particle size of pellet aid granules ranges from 200 µm to 600 µm.

In an embodiment related to a manufacturing process, granulated polymeric tablet aids additives with increased bulk particle densities and particles sizes are scaled up in a fluidized bed granulation process also referred to as fluidized spray drying. The underling principles involved in fluidized beds is the turbulent flow or vortex flow suspension of the solid particles in air. The air lifts and separates the powdered ingredients that constitute the pellet aid. The fluidized bed granulation process combines dry mixing, wet granulation and drying. In order to accommodate liquids or slurries in the granulation process, a spray nozzle is mounted somewhere above the rising fluidized bed of powdered ingredients. Through the nozzle system, a liquid or slurry is added to the fluidized powder to achieve granulation and the desired particle size of the pellet aid granules. It is preferred that the pellet aid granules have a particle size ranging from 100 µm to 3000 µm.

In a separate embodiment, related to the first three aspects of the present invention, a dry polymer composition is prepared from one or more solution, suspension or emulsion polymers and contains no inorganic solids or organic solids.

In one embodiment of this process, it is preferred that plurality of ingredients are used to make a detergent tablet. Typical ingredients that make a detergent can be found in U. S. Patent Nos. 5,883,061 and 5,360,567, the contents of which is usefully employed in the present invention. The polymeric dispersant is a homopolymer or copolymer of acrylic acid. It is preferred that the polymer granules have a particle size ranging from 100 μm to 3000 μm. Using Acusol 445N as a seed particle, fluidized spray drying resulted in a polymer granule having a bulk density that ranged from 616 g/L to 671 g/L. The mean particle size ranged from 812 μm to 1178 μm.

The following examples are presented to illustrate the invention and the results obtained by the test procedures.

Determination of Mechanical Strength of Pellets (Diametal Fracture Stress)

Diametral stress fracture, that is, the amount of force applied to the pellet per unit area (KiloPascals, kPa) at the point the pellet fractures, was determined by slowly applying a continuously increasing load to a pellet of known diameter and thickness, until compression failure (fracture). The diametrical fracture stress, X, was calculated according to the equation:

$$X = 2L / d\,h\,\pi$$

where L = applied load at point of fracture, d = pellet diameter and h = pellet thickness.

Determination of Pellet Friability

Pellet friability was measured using a friability test device that consisted of a thick glass cylinder, 15 cm in diameter, having three equally spaced glass indentations approximately 2 cm in height. Pellets were placed into the device and tumbled under at a fixed speed. Friability was measured in units of seconds required for the pellet to fracture.

Assessment Of The Speed Of Disintegration Of The Pellets In Water

Each pellet (8g or 40g) was placed in a metal wire holder and held at the center of a beaker. Four liters of ambient temperature (20-25° C) tap water (150 ppm hardness) was added to the beaker. The water was unstirred (i. e. static) and the time taken for the pellet to disintegrate completely out of the holder was determined.

Preparation Of Pellets With Pellet Aids Of The Present Invention Incorporated Therein As Binder Materials.

Direct Compaction of Detergent Pellets Using Pellet Aid as a Dry Binder.

Dried, polymeric pellets aids at various weight percentages (as indicated in the Tables below) were mixed thoroughly with generic detergent granules and placed inside a stainless steel cylinder (2.8 cm diameter). A piston rod was inserted into the cylinder and the assembly placed between lower and upper plates of a Carver laboratory pellet press. A specified load stress was applied to the pellet at ambient temperature and the pellet was removed from the cylinder. A range of compacting pressures were used and the diametrical fracture stress, friability and pellet disintegration time (determined as described above) were summarized in the Tables below.

EXAMPLES 1-4

Freeze dried emulsion polymers 1-4 were employed as pellet aid compositions for preparing pellets, as summarized in Table I.

Table I.

| Polymeric Aids for Pellets: Freeze Dried Polymer Additives (at 3% by weight use levels based on total pellet weight) | | | | | |
|---|---|---|---|---|---|
| Sample | Compositions | Tg (°C) | Morphology | Hardness (kPa) | Friability (sec) |
| 1 | 30 MAA/70 EHA | 1 | Fibrous | 9.31 | 34 |
| 2 | 53EA/19MMA/10H | 53 | Flake | 24.87 | 360 |

Table I.   (continued)

| Polymeric Aids for Pellets: Freeze Dried Polymer Additives (at 3% by weight use levels based on total pellet weight) | | | | | |
|---|---|---|---|---|---|
| Sample | Compositions | Tg (°C) | Morphology | Hardness (kPa) | Friability (sec) |
| | EMA/18MAA | | Powder | 11.09 | 12 |
| 3 | 32EA/40MMA/10H | 89 | Flake | 15.49 | 36 |
| | EMA/18MAA | | powder | 9.49 | 8 |
| 4 | 25BA/47MMA/10H | 95 | Flake | NA | 54 |
| | EMA/18MAA | | Powder | 7.71 | 4 |
| **Key**:<br>EA= ethyl acrylate<br>BA= butyl acrylate<br>MMA = methyl methacrylate<br>MAA = methacrylic acid<br>EHA = 2-ethyl hexyl methacrylate<br>HEMA = hydroxy ethyl methacrylate | | | | | |

Table I summarizes polymers synthesized from various combinations of monomers in freeze dried form which exhibit high binding efficiency as aids for detergent tablets using direct compression. The pellets contained 3 wt % of a specific polymeric pelleting aid composition. The performance of a specific polymeric pellet aid appears to be directly related to the morphology of the polymer that makes up the pellet aid composition. The binding efficiency of pellet aids exhibiting a "flake" type morphology is considerably higher than the same pellet aids exhibiting a "fine powder" morphology.

The emulsion copolymers summarized in Table I exhibited a broad glass transition temperature, from 1°C to 95°C. A useful range of Tg for the purposes of the present invention ranges from -20°C to 95°C. All pellets prepared from the polymeric pellet aids exhibited similar mechanical strengths, as determined from friability tests. Morphological differences in the pellet aids appear to have the greatest influence on the mechanical strength of the resulting pellets.

EXAMPLES 5-7

Examples 5-7 are spray-dried EHA/MAA co-polymers having a range of particle sizes that are used to prepare pellet aids, as summarized in Table II.

Table II.

| Spray Dried Polymeric Pellet Aids | | | | | |
|---|---|---|---|---|---|
| | Friability (sec) at Compaction Load (lb)* | | | Particle Size (μm) | Bulk Density (g/ml) |
| Sample (EHA/MAA) | 250 lb | 500lb | 1000lb | | |
| Control (no EHA/MAA) | 5 | 13 | 27 | NA | NA |
| 5 | 67 | 179 | 297 | 40 | 0.309 |
| 6 | 8 | 8 | 80 | 100 | 0.36 |
| 7 | 23 | 96 | 145 | 100 | 0.29 |

**\*(at 3% by weight use levels based on total pellet weight)**

Table II summarizes the performance data for spray-dried polymeric pellet aids. The samples in Table II possess the same polymer compositions, but exhibit different physical properties, such as particle sizes and bulk density. Sample 5 has a smaller particle size (40 μm) and exhibits the highest binding efficiency in terms of friability and a concomitant improvement in mechanical strength in the resulting pellet. Samples 6 and 7 possess the same particle size (100 μm), but different bulk densities. Sample 7 exhibits higher binding efficiency and higher mechanical strength in the resulting pellet. It appears that the binding efficiency of a specific pellet aid strongly correlates with its bulk density. The less the bulk density, the higher the binding efficiency. Microscopic analysis demonstrates that a majority of the polymer particles that constitute the pellet aid exhibited "balloon" or "hollow" type structures/morphologies. Under tablet compaction conditions, the hollow structures collapse into smaller particles, thereby increasing their surface area. The effect of adding such a pellet aid provides a more robust pellet with improved mechanical strength. As the bulk density decreases for a given polymeric pellet aid, the percentage of the "balloon" structure increases, therefore, its binding efficiency increases as does the mechanical strength of the resulting pellet, as shown in Table II for Examples 6 and 7.

EXAMPLES A-O

Examples A-O are granulated polymeric pellet aids used to prepare pellets, as summarized in Tables III and IV.
In Examples A-O, polymeric co-granules were prepared by granulating various polymer emulsions with some inorganic and organic solids, such as zeolite, soda ash, synthetic $SiO_2$, dextrose and starches. The granulates were prepared in a Kitchen Aid apparatus and dried in a fluidized bed apparatus at 50°C. The binding efficiency of the resulting granules were tested and the results are summarized in Table III and IV.

Table III.

| Examples of Co-granulated Polymeric Pellet Aids | | | | | | | |
|---|---|---|---|---|---|---|---|
| Example | Solid 1 (PS, μm) | Amount added | Emulsion/ Solid 2 | Amount added | Filter | Comments | Friability (sec) 250 lb load* |
| A | Spray Dried Sample 1 powder (20 μm) | 20 gm | Sample 1 | 10 gm | yes | clumps after filtration | 5 sec |
| B | Zeolex 7A | 20 gm | Sample 1 | 10 gm | yes | free flowing powder | 3 sec |
| C | Zeolex 7A | 20 gm | Sample 1 | 20 gm | yes | free flowing powder | 3 sec |
| D | Pregel Corn Starch | 40 gm | Sample 1 | 30 gm | no | Requires breaking w/ Waring blender free flowing powder | 1000 lb load 56 sec |
| E | Spray Dried Sample 1 (100 μm) | 20 gm | Zeolite + Sample 1 | 5 gm 10 gm | yes | free flowing powder | 12 sec |
| F | Spray Dried Sample 1 (20 μm) | 20 gm | Na Carb + Sample 1 | 5 gm 5 gm | yes | free flowing powder | 8 sec |
| G | Spray Dried Sample 1 (100 μm) | 20 gm | Na Carb + Sample 1 | 5 gm 5 gm | yes | free flowing powder | 3 sec |
| H | Spray Dried Sample 1 (20 μm) | 20 gm | Na Carb + Sample 1 | 10 gm 5 gm | yes | free flowing powder | 12 sec (1000 lb) 30 sec |
| I | Spray Dried Sample 3 | 20 gm | Hubers or 600 + Sample 3 | 5 gm 25 gm | yes | Granulated, then Fluidized bed dried 50° C for 20 mins | 19 sec 24 sec |

**\*(at 3% by weight use levels based on total pellet weight)**

Table III.   (continued)

| Examples of Co-granulated Polymeric Pellet Aids | | | | | | | |
|---|---|---|---|---|---|---|---|
| Example | Solid 1 (PS, μm) | Amount added | Emulsion/ Solid 2 | Amount added | Filter | Comments | Friability (sec) 250 lb load* |
| J | Spray Dried Sample 3 | 20 gm | Zeolex 7A + Sample 3 | 5 gm 35 gm | yes | Granulated, then Fluidized bed dried 50° C for 20 mins | 37sec |
| Key: Zeolex 7A = Zeolite, Na Carb = Sodium Carbonate, Hubersorb 600 = Synthetic SiO₂ Pregel Corn Starch = Pregelatinized corn starch | | | | | | | |

*(at 3% by weight use levels based on total pellet weight)

Table IV.

| Examples of Co-granulated Polymeric Pellet Aids | | | | | | |
|---|---|---|---|---|---|---|
| Example | Solid 1 | Amount added | Emulsion/ Solid 2 | Amount added | Particle Size Range (μ) | Friability* @ 1000 psi (sec) |
| K | Camdex | 20.06g | Zeolex 7A + Sample 1 | 10g 18.17g | 150-250 | 80 |
| L | Camdex | 5g | Zeolex 7A + Sample 1 | 15.1g 23.27g | 150-355 | 49 |
| M | Tapioca Starch | 5.05g | Zeolex 7A + Sample 1 | 15.08g 26.29g | 150-355 | 42 |
| N | Stadex 125 | 5.01g | Zeolex 7A + Sample 1 | 15g 31.95g | 150-355 | 55 |
| O | Pure-Dent B810 | 5.02g | Zeolex 7A + Sample 1 | 15g 26g | 355-1400 | 52 |
| Camdex = dexstrates (95% dextrose, 5% starch) Stadex 125 = Dextrin Pure-Dent B810 = Corn Starch | | | | | | |

*(at 6% by weight use levels based on total pellet weight) Key:

The granulation process is usefully and preferably employed in accordance with the invention for the manufacture of multifunctional, polymeric pellet aids having improved flow properties and reduce dusting behavior. Table III demonstrates that a variety of inorganic and organic solids can be used to formulate pellet aids via the granulation process. The resulting co-granulated pellet aids exhibit high binding efficiencies for the ingredients that make up a pellet. A polymeric disintegrating agent and a wicking agent can also be combined with the polymeric binder to produce a multifunctional pellet aid. Suitable disintegrating agents include for example super absorbent polymers, such as for example cross-linked polyacrylic acid and equivalent materials. Organic solids such as for example dextrose, cellulose derivatives and equivalent materials are good wicking agents, which can facilitate the transport of water by physically entraining water into the center of the pellets, the co-granulated pellet aids can also accelerate the disintegration time of the tablets. Co-granulated pellet aids and the processes used to formulate them, therefore, substantially reduce the production costs as compared to dry polymeric pellet aids in the absence of co-granulated inorganic and organic solids, as well as providing pellet aid having multifunctional properties (e.g. binder, disintegrating agent, wicking agent, whitening agent, etc.), as shown in Table V.

Table V.

| Performance Data for Pellets Using Co-granulated Pellet Aids | | | | |
|---|---|---|---|---|
| Tablet (40 gram) | Compaction Load (lb) | Dwell Time (second) | Disintegration Time (min:sec) | Friability (min: sec) |
| 1% Disintegrant | 500 | 15 | > 6 min | |
| 1% Disintegrant + 2% K | 500 | 15 | 3:20 | 0:59 |
| 1% Disintegrant + 4% K | 500 | 15 | 2:40 | 1:53 |
| Disintegrant = cross-linked poly (meth)acrylic acid | | | | |

The data in Table V shows that co-granulated pellet aid K of the present invention improved both the mechanical strength and disintegration rate of the resulting pellets, as measured by friability testing and disintegration time, respectively. The data demonstrates that the co-granulated pellet aid can function as a binder (increases the mechanical strength of the resulting pellets), and a disintegration agent (improves the disintegration rate of the resulting pellets).

**Claims**

1. A process for manufacturing polymer granules which comprises the steps of: (a) introducing a neutralized emulsion polymer having a Tg ranging from -20°C to 250°C as seed particles; and (b) spraying an aqueous solution of the neutralized emulsion polymer on to the seed particles to achieve a particle size ranging from 100 µm to 3000 µm, a bulk density greater than 500 g/Liter and low hygroscopicity.

2. The process according to claim 1, wherein the polymer granules are polymeric dispersants and comprise one or more neutralized homopolymers or copolymer selected from acrylic acid and methacrylic acid.

3. The process according to claim 1, wherein polymeric granules and organic solids are co-granulated.

4. The process according to claim 1, wherein polymeric granules and inorganic solids are co-granulated.

5. The process according to claim 1, wherein polymeric granules, inorganic solids and organic solids are co-granulated.

6. A process for manufacturing polymer granules which includes the steps of: (a) introducing a slurry of 0 to 40 % by weight of one or more inorganic solids or organic solids and 20 to 80% by weight of one or more neutralized emulsion polymers having a Tg ranging from -20°C to 250°C as seed particles; and (b) spraying an aqueous solution of neutralized emulsion polymer on to seed particles to achieve a particle size ranging from 100 µm to 3000 µm, a bulk density greater than 500 g/Liter and low hygroscopicity.

7. The process according to claim 6, wherein the polymer granules are polymeric dispersants and comprise one or more neutralized homopolymers or copolymers selected from acrylic acid and methacrylic acid.

8. The process according to claim 6, wherein the polymers are partially neutralized.

9. The process according to claim 6, wherein the polymers are completely neutralized.

**European Patent Office**

## EUROPEAN SEARCH REPORT

Application Number

EP 03 25 7681

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 698 174 A (HARTMANN HEINRICH ET AL) 6 October 1987 (1987-10-06) * column 1, line 30 - line 32 * * example 5 * --- | 1-9 | C08J3/12 C11D3/00 |
| D,X | US 6 492 320 B2 (CHIA WEN H ET AL) 10 December 2002 (2002-12-10) * column 2, line 22 - line 25 * * column 8, line 32 - line 40 * * examples 5-7 * --- | 1-9 | |
| X | US 4 946 653 A (STOPP GERHARD ET AL) 7 August 1990 (1990-08-07) * column 3, line 35 - line 59 * ----- | 1-9 | |
| | | | TECHNICAL FIELDS SEARCHED (Int.Cl.7) C08J C11D |

The present search report has been drawn up for all claims

| Place of search | Date of completion of the search | Examiner |
|---|---|---|
| MUNICH | 3 March 2004 | Müller, M |

EP 1 431 333 A1

## ANNEX TO THE EUROPEAN SEARCH REPORT
## ON EUROPEAN PATENT APPLICATION NO.

EP 03 25 7681

03-03-2004

| Patent document cited in search report | | Publication date | Patent family member(s) | | Publication date |
|---|---|---|---|---|---|
| US 4698174 | A | 06-10-1987 | DE | 3504896 A1 | 14-08-1986 |
| | | | AT | 35148 T | 15-07-1988 |
| | | | CA | 1248838 A1 | 17-01-1989 |
| | | | DE | 3660311 D1 | 21-07-1988 |
| | | | EP | 0192153 A1 | 27-08-1986 |
| | | | ES | 8800716 A1 | 01-02-1988 |
| | | | JP | 61188497 A | 22-08-1986 |
| US 6492320 | B2 | 04-07-2002 | US | 6503878 B1 | 07-01-2003 |
| | | | US | 2002086809 A1 | 04-07-2002 |
| | | | CN | 1362446 A | 07-08-2002 |
| | | | EP | 1219702 A1 | 03-07-2002 |
| | | | JP | 2002212446 A | 31-07-2002 |
| | | | AU | 5644400 A | 29-03-2001 |
| | | | BR | 0004367 A | 10-04-2001 |
| | | | CA | 2317977 A1 | 24-03-2001 |
| | | | CN | 1290481 A | 11-04-2001 |
| | | | EP | 1087009 A2 | 28-03-2001 |
| | | | JP | 2001146520 A | 29-05-2001 |
| US 4946653 | A | 07-08-1990 | DE | 3206236 A1 | 01-09-1983 |
| | | | DE | 3360248 D1 | 18-07-1985 |
| | | | EP | 0087039 A1 | 31-08-1983 |
| | | | ES | 8400891 A1 | 16-02-1984 |
| | | | JP | 1604366 C | 22-04-1991 |
| | | | JP | 2026536 B | 11-06-1990 |
| | | | JP | 58170534 A | 07-10-1983 |
| | | | MX | 162274 A | 19-04-1991 |

EPO FORM P0459